# EUROPEAN PATENT APPLICATION

(11) **EP 4 155 621 A1**
(43) Date of publication of application: **29.03.2023**
(21) Application number: 21199506.3
(22) Date of filing: 28.09.2021
(51) Int. Cl.: F24S 25/65, H02S 30/00, F24S 25/67

(54) **RAIL BRACKET FOR RETAINING A SOLAR PANEL SUPPORT RAIL**

(71) Applicant: IMS Solar B.V., 1817 BH Alkmaar (NL)
(72) Inventor: SIE, David Koen Bing, Heiloo (NL)
(74) Representative: EP&C

(57) **Abstract**

Rail bracket for retaining a solar panel support rail, wherein the rail bracket comprises:
- a main body defining a hole via which it can be fixed to a target surface,
- a first hook element being connected to the main body, wherein the hook element has a free hook end and defines a recess that is configured to accommodate a bracket hooking member of a solar panel support rail,
- a retainer member being connected to the main body and being located facing the recess, wherein the retainer member comprises a resilient member and a retaining tab, the retaining tab being connected to the resilient member, wherein an entry gap is defined between the retainer member and the free hook end, wherein the retainer member is configured to:
a) first be moved downward from an initial, rail retaining position in an undeformed state of the resilient member to a rail placement position in a deformed state of the resilient member, wherein in the rail placement position the entry gap is wider than in the rail retaining position and provides access for the bracket hooking member to be positioned in the recess,
b) subsequently to move upward from the rail placement position back to the rail retaining position to lock the bracket hooking member in the recess after the bracket hooking member is placed in the recess.

## Description

### FIELD OF THE INVENTION

The field of the invention relates to the installation of UV solar panels on structures and surfaces and in particular to a rail bracket for retaining a solar panel support rail.

### BACKGROUND OF THE INVENTION

UV solar energy provides an increasing portion of global energy demand. The UV solar panels which convert solar energy into electricity are often installed on roofs. There is a ongoing need to make UV solar energy financially more attractive in terms of cost/benefit. The efficiency of the installation of UV solar panels on roofs and other target surfaces is an important aspect of the financial picture. For this reason there is a demand for installation methods and devices with which UV solar panels can be installed quickly and at low costs. Several solutions have been created and are available on the market. Naturally, other requirements such as strength and also safety during installation also apply.

A known solution is to mount brackets to a roof or other target surfaces. Support rails are then mounted to the brackets. The support rails typically extend horizontally. Subsequently, the UV solar panels are mounted to the rails. It was recognized in the present invention that the known rails and brackets are rather cumbersome which results in a relatively slow installation process which in turn results in relatively high costs.

### OBJECT OF THE INVENTION

It is an object to provide a rail bracket which can be mounted to a roof or other target surface relatively quickly and at relatively low costs and which allows UV solar panels support rails to be connected to said rail bracket relatively quickly and at relatively low costs.

### SUMMARY OF THE INVENTION

In order to meet the objective, a rail bracket for retaining a solar panel support rail is provided, wherein the rail bracket comprises:
- a main body defining a hole via which it can be fixed to a target surface,
- a first hook element being connected to the main body, wherein the hook element has a free hook end and defines a recess that is configured to accommodate a bracket hooking member of a solar panel support rail,
- a retainer member being connected to the main body and being located facing the recess, wherein the retainer member comprises a resilient member and a retaining tab, the retaining tab being connected to the resilient member, wherein an entry gap is defined between the retainer member and the free hook end, wherein the retainer member is configured to:
   a) first be moved downward from an initial, rail retaining position in an undeformed state of the resilient member to a rail placement position in a deformed state of the resilient member, wherein in the rail placement position the entry gap is wider than in the rail retaining position and provides access for the bracket hooking member to be positioned in the recess,
   b) subsequently to move upward from the rail placement position back to the rail retaining position to lock the bracket hooking member in the recess after the bracket hooking member is placed in the recess.

By using such a rail bracket, a solar panel support rail can be reliably and securely fixated to a structure or target surface. The solar panel support rail can simply be clicked onto the bracket by hand without the use of any tool. The structure or target surface can be any type of roof or support structure.

In an embodiment, the rail bracket is configured to prevent a movement of the bracket hooking member in four directions in the locked state, wherein:
- a downwardly facing side of the first hook element facing the upwardly facing support surface prevents the bracket hooking member from moving away from the main body,
- a side of an upwardly extending portion of the first hook element prevents the bracket hooking member from moving away from the retainer member,
- the upwardly facing support surface prevents the bracket hooking member from moving towards the main body,
- the retaining tab prevents the bracket hooking member from moving out of the recess.

In an embodiment, the retainer member is configured to abut against a stop of the solar panel support rail when the bracket hooking member of the solar panel support rail is located in the recess and the retainer member has moved back to the retainment position. By abutting against the stop of the solar panel support rail, the solar panel support rail can be effectively kept connected to the rail bracket.

In an embodiment, the resilient member is a leaf spring. Such a resilient member is reliable and subject to very little wear while being very stiff in two direction and being sufficiently compliant in the necessary direction.

In an embodiment, the retainer member extends downward from an end of the resilient member and comprises a curved part which forms a transition between the resilient member and the retaining tab. Herein, the retaining tab may extend in particular at a substantially right angle to the resilient member.

Such a positioning of the retaining tab can offer a maximum amount of interacting surface with the stop. Thus creating a secure connection between the solar panel support rail and the bracket.

In an embodiment, in the rail placement position, the retainer member is flush or substantially flush with an upwardly facing support surface of the first hook element. This facilitates the placement of the solar panel support rail, in particular the bracket hooking member in the recess.

This creates a secure connection between the solar panel support rail and the rail bracket and in turn provides a secure connection between solar panels and the structure or target surface.

In an embodiment, the rail bracket further comprises a second hook element that extends away from the main body and is located at a distance from the first hook element. such a second hook element aids in preventing the solar panel support rail from rotating or pivoting around the first hook element.

In an embodiment, the first and second hook element face in the same direction and are configured to allow a first and second bracket hooking member of a solar panel support rail to slide into the first and second hook element from the same side. This facilitates the placement of a solar panel support rail.

In an embodiment, the second hook element does not have a retainer member. Because the retainer member located near the first hook element already limits a movement of the solar panel support rail in a direction out of the recess of the first hook element, a second hook element would be unnecessary and costly.

In an embodiment, the rail bracket is made of a cut off piece of metal, in particular aluminium, more in particular an extruded aluminium profile.

In an embodiment, the resilient member and the retaining tab are integral. Using an integral part instead of multiple part that have to cooperate, the reliability is increased and the necessary maintenance is potentially decreased.

In a further aspect, the invention relates to an assembly of a rail bracket according to any of the rail bracket claims and a solar panel support rail comprising a connector wall portion that comprises at least one bracket hooking member, wherein the at least one bracket hooking member is located and locked in the recess of the first hook element and wherein the retaining tab prevents the solar panel support rail from moving out of the recess.

In an embodiment, the resilient member is connected to the main body at a first end of the resilient member. In particular, it is connected to a protruding part of the main body, wherein the resilient member extends from the connection at the protruding part towards the first hook element. By connecting the resilient member at an end thereof, a relatively small force is necessary to create a relatively large deflection.

In an embodiment, the solar panel support rail further comprises a second bracket hooking member and the second bracket hooking member is located in the recess of the second hook element.

In yet a further aspect, the invention relates to a method for connecting a solar panel support rail comprising a bracket hooking member to a target surface using at least one rail bracket according to any of claims 1-12, the method comprising:
- mounting the rail bracket to a target surface via the main body,
- placing a solar panel support rail onto the rail bracket, wherein the bracket hooking member is placed in the recess by deforming the resilient member of the retainer member from a retainment position to a rail placement position, wherein when the bracket hooking member is located in the recess, the retainer member moves back to the retainment position and locks the solar panel support rail in place, wherein the retaining tab abuts against a stop of the solar panel support rail.

The invention will be more clearly understood from the following description of some preferred embodiments, which are given by way of example only, with reference to the accompanying drawings.

### BRIEF DESCRIPTION OF THE DRAWINGS

Figure 1A and 1B show a roof with two solar panels supported by solar panel support rails and rail brackets and a close-up thereof.
Figures 2A, 2B, and 2C provide an exploded view, an ISO view and a side view of a rail bracket.
Figure 3A and 3B show different views of solar panel support rail.
Figures 4A, 4B, and 4C show a solar panel support rail and a rail bracket.
Figures 5A, 5B, and 5C show solar panel support rails together with a connecting piece.
Figures 6A, 6B, and 6C show a connecting piece and solar panel support rails in different views.
Figures 7A and 7B show solar panel support rails together with a connecting piece and a connecting tool.
Figures 8A and 8B show solar panel support rails together with a connecting piece and a connecting tool deforming a coupling member.

### DETAILED DESCRIPTION OF THE DRAWINGS

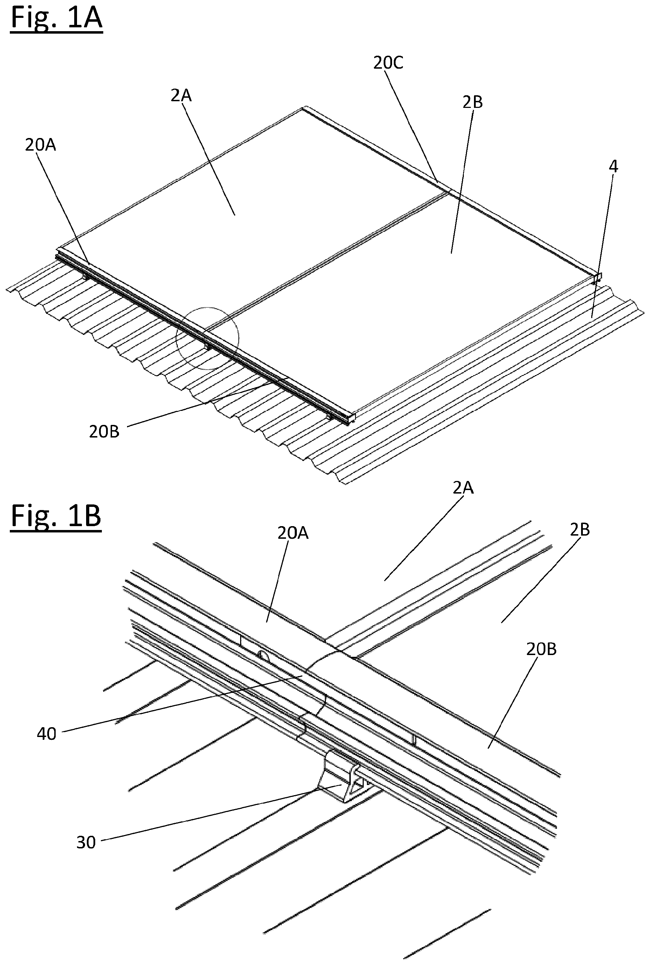

Figures 1A and 1B show a system using a plurality of solar panel support rails 20A, 20B, 20C that are used to retain solar panels 2A, 2B on structures or target surfaces 4 such as roofs, etc. Because it may desirable to cover large areas with solar panels and rails that span these dimensions are cumbersome to move and install, they are divided in several solar panel support rails 20A, 20B, 20C. Each rail has a length which allows easy handling and installation. At their ends, these solar panel support rails may be joined using connecting pieces 40 that keep two solar panel support rails together and aligned. To keep the solar panel support rails, and therewith the solar panels attached to the structure of target surface, the solar panel support rail 20B is retained by a rail bracket 30 that is fixated with respect to the structure or target surface 4.

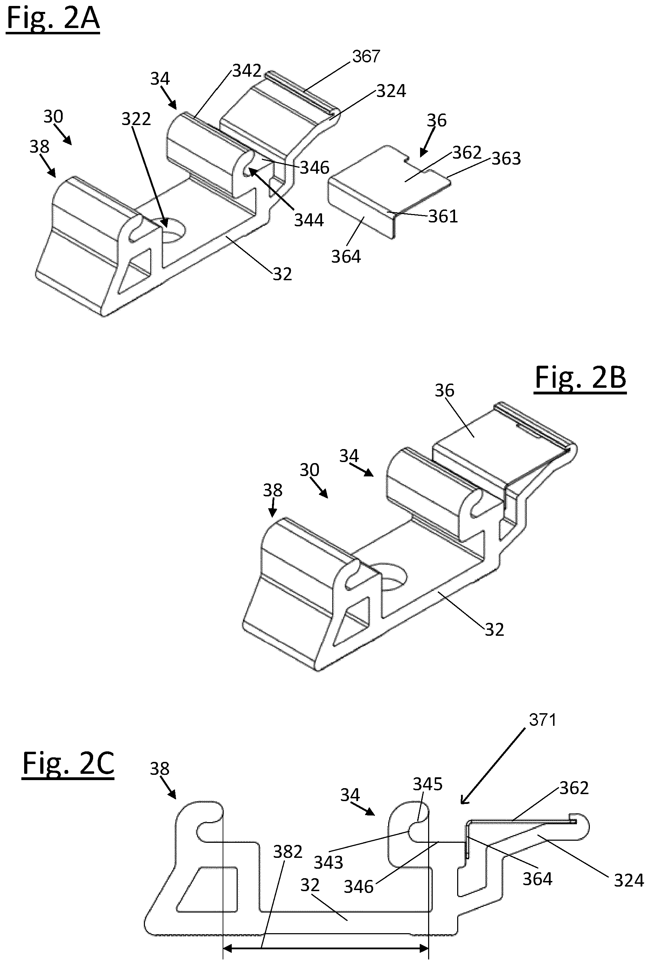

Turning to figures 2A, 2B, and 2C, a rail bracket 30 for retaining a solar panel support rail 20 comprises a main body 32 that can be fixed to the structure or target surface 4 via a hole 322 that it defines. For example, it can be fixed using a bolt or a rivet which is inserted into the hole. A first hook element 34 is connected to the main body and comprises a free hook end 342 that defines a recess 344. The first hook element is configured to accommodate a bracket hooking member 222A (depicted in figured 4A, 4B, and 4C) of the solar panel support rail. To lock the bracket hooking member in the recess 344, the rail bracket further comprises a retainer member 36 that is also connected to the main body 32 and faces the recess.

To allow the bracket hooking member to be placed in the recess, the retainer member 36 comprises a resilient member 362 and a retaining tab 364 that is connected to the resilient member. Here, the resilient member and the retaining tab are integral and the retaining member comprises a curved part 361 that forms a transition between the resilient member and the retaining tab. The retaining tab 364 extends at a substantially right angle to the resilient member, the resilient member being a leaf spring. The resilient member comprises a first end 363 at which it is connected to the main body 32 at a connection point 367 thereof, in particular to a protruding part 324 of the main body. The resilient member extends from the connection at the protruding part towards the first hook element 34. Between the retainer member 36 and the free hook end 342 of the first hook element, an entry gap 371 is defined through which the bracket hooking member may be placed in the recess.

Besides having a first hook element 34, here, the rail bracket 30 also comprises a second hook element 38 that extends away from the main body and is located at a distance 382 from the first hook element 34. The first and second hook element face in the same direction and are configured to allow a first and second bracket hooking member 222A, 222B of the solar panel support rail to slide into the first and second hook element from the same side. When a solar panel support rail 20 is placed onto the rail bracket, the second hook element 38 prevents the solar panel support rail from pivoting around the first hook element. The depicted second hook element has the same feature as the first hook element, but does not have a retainer member.

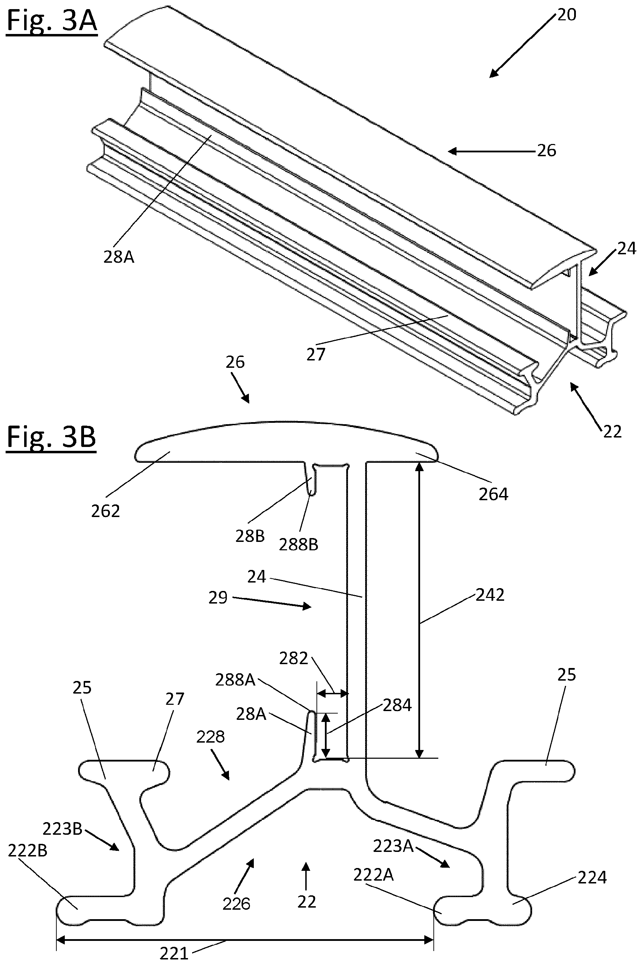

In figures 3A and 3B, a solar panel support rail 20 is shown in an ISO view and in side view. The solar panel support rail comprises a connector wall portion 22, a support wall portion 24, and a retainer wall portion 26. The connector wall portion 22 is configured to work together with the rail bracket 30 to keep the solar panel and the solar panel support rail 20 fixated with respect to the roof. To this end it comprises two bracket hooking members 222A, 222B that are located on a first, lower side 226 of the connector wall portion. The bracket hooking members 222A, 222B are located at a distance 221 from each other and are configured to hook on the rail bracket 30 and define a recess 223A, 223B to this end. Also, the connector wall portion defines a stop 224 that faces away from the recess 223A and that is configured to abut against the retainer member 36 of the rail bracket 30.

On a second, upper side 228 of the connector wall portion, the support wall portion 24 is connected to the connector wall portion 22 at a lower end of the support wall portion and protrudes upwards and away from the connector wall portion.

The retainer wall portion 26 is connected to an upper end of the support wall portion 24. This retainer wall portion comprises a first part 262 that protrudes away from the support wall portion on a first side (left in fig. 3B) of the support wall portion and comprises a second part 264 that protrudes away from the support wall portion on a second side (right in fig. 3B) of the support wall portion. When a solar panel is placed in the solar panel support rail 20 and rests upon a solar panel support surface, the first and second parts of the retainer wall portion 26 prevent the solar panels from moving in a direction away from the connector wall portion. When placing a solar panel into the solar panel support rails, a second solar panel support rail is provided right left of the first solar panel support rail. A right side of the solar panel is first placed under the first part 262 of the right solar panel support rail and a second side is then lowered onto the left solar panel support surface 25 of the left solar panel support rail. Subsequently, the solar panel is moved to the left under the second part 264. The solar panel then rests on the solar panel support surfaces 25 of the solar panel support rails and is kept in place by the second part 264 of a left solar panel support rail and by the first part 262 of the right solar panel support rail.

As shown in figures 1A and 1B, two solar panel support rails 20A, 20B can be connected using a connecting piece 40. This connecting piece can be accommodated by a connector space 29 defined by a first coupling member 28A that is parallel to the support wall portion and the support wall portion 24. The first coupling member is positioned at a first distance 282 from the support wall portion and extends upwards from the connector wall portion 22 over a second distance 284 in a direction towards the retainer wall. This first coupling member 28A is plastically deformable and a local portion 286A of the first coupling member can be deformed towards the support wall portion 24 to locally reduce the first distance. When a solar panel is placed in the solar panel support rail 20, the solar panel can be supported by the support wall portion and/or the first coupling member.

In addition to the first coupling member 28A, the solar panel support rail 20 further comprises a second coupling member 28B which extends from the retainer wall portion and is substantially parallel to the support wall portion 24. The first coupling member and the second coupling member are located on a same side of the support wall portion and, being substantially aligned, the connector space is present between the support wall portion and both the first and second coupling members. While the first coupling member 28A and second coupling member 28B are separate and each comprise a free end 288A, 288B, it would also be possible that they would be an integral part.

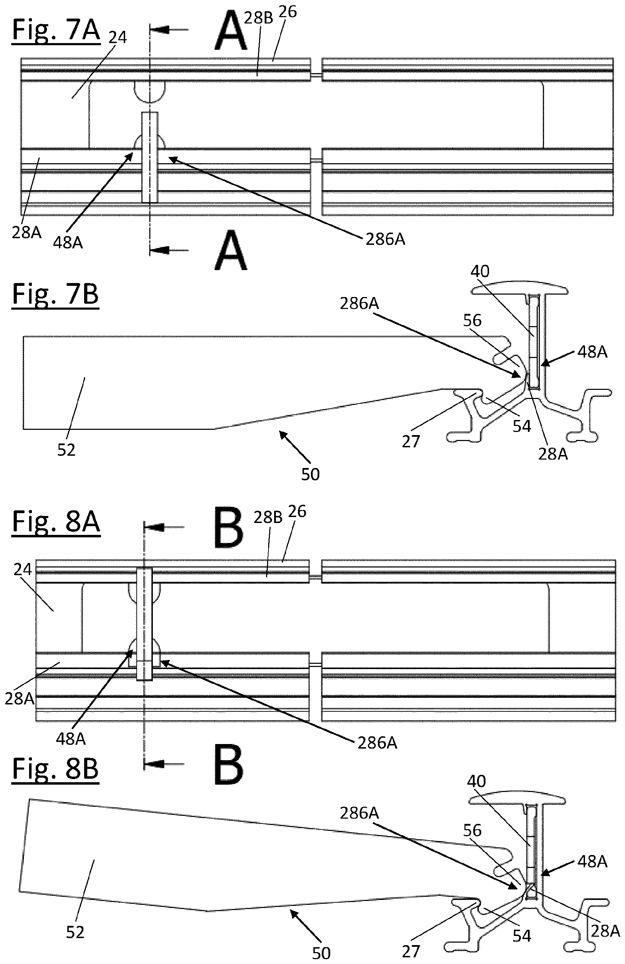

In order to deform the first coupling member 28A, the solar panel support rail 20 comprises a tool hooking element 27 located on the second side 228 of the connector wall portion 22 behind which a connecting tool 50 can be hooked (illustrated in figures 7A, 7B, 8A, and 8B). This tool hooking element protrudes upwards from the connector wall portion 22.

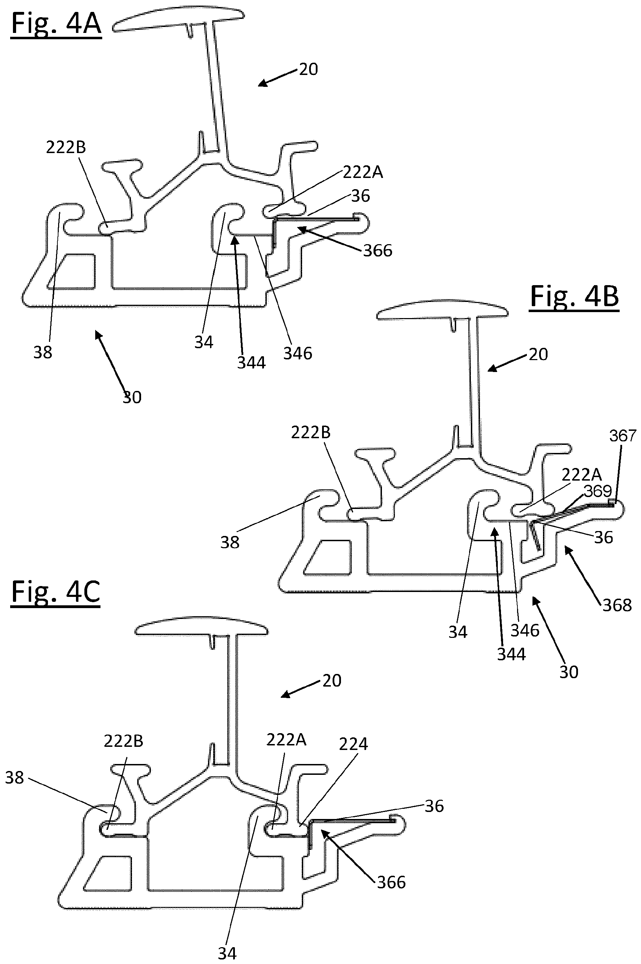

In figures 4A, 4B, and 4C, the solar panel support rail 20 is shown while being placed in the rail bracket 30. As shown moving from figure 4A to 4B to 4C, the retainer member 36 is configured to be moved downward from an initial, rail retaining position 366 in an undeformed state of the resilient member 362 to a rail placement position 368 in a deformed state of the resilient member. In the rail placement position the entry gap is wider than in the rail retaining position and provides access for the bracket hooking member 222A to be positioned in the recess. Subsequently, the retainer member 36 moves from the rail placement position 368 back to the rail retaining position 366 to lock the bracket hooking member 222A in the recess 344 after the bracket hooking member is placed in the recess.

In figure 4B, in the rail placement position 368 the retainer member 36 is substantially flush with an upwardly facing support surface 346 of the first hook element. this facilitates the placement of the solar panel support rail 20. The resilient member provides a sloping guiding surface 369 from the connection point 367 to upwardly facing support surface 346. The sloping guiding surface guides the solar panel support rail into the locking position.

In figure 4C, when the bracket hooking member 222A is located in the recess 344 and the retainer member 36 has moved back to the retainment position 366, the retainer member abuts against the stop 224 of the solar panel support rail.

When the solar panel support rail 20 has been placed in the rail bracket 30, the movement of the bracket hooking members is prevented in four directions:
- a downwardly facing side 345 (depicted in figure 2C) of the first hook element 34 facing the upwardly facing support surface prevents the bracket hooking member from moving away from the main body,
- a side 343 of an upwardly extending portion of the first hook element 34 (depicted in figure 2C) prevents the bracket hooking member from moving away from the retainer member,
- the upwardly facing support surface 346 prevents the bracket hooking member from moving towards the main body,
- the retaining tab 364 prevents the bracket hooking member from moving out of the recess 344.

The solar panel support rail can be removed if desired by pushing the retainer member 36 downward, thereby widening the entry gap and removing the solar panel support rail.

The depicted assembly further comprises a second hook element 38 that accommodates the second hooking member 222B of the solar panel support rail.

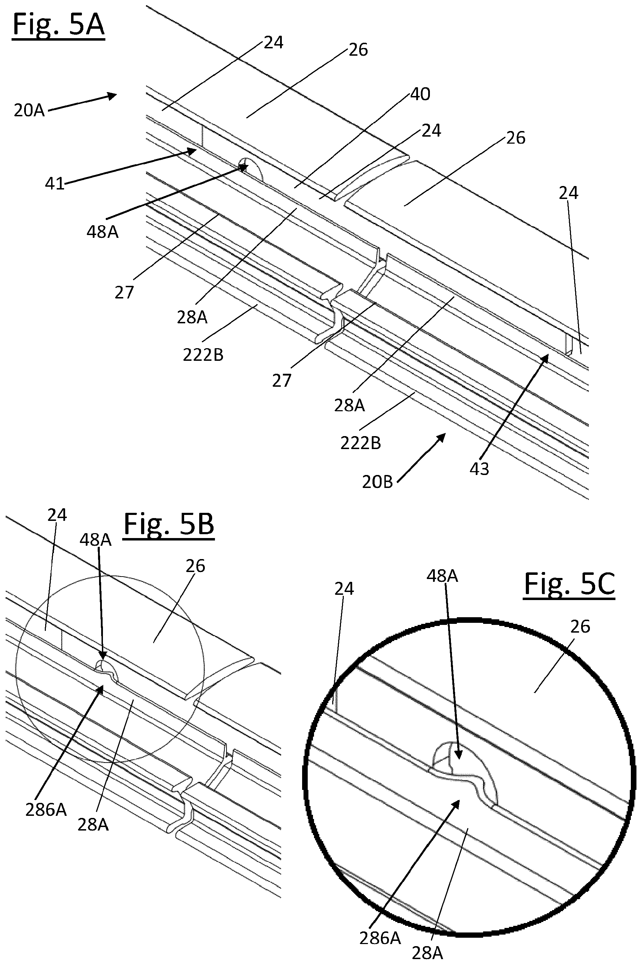

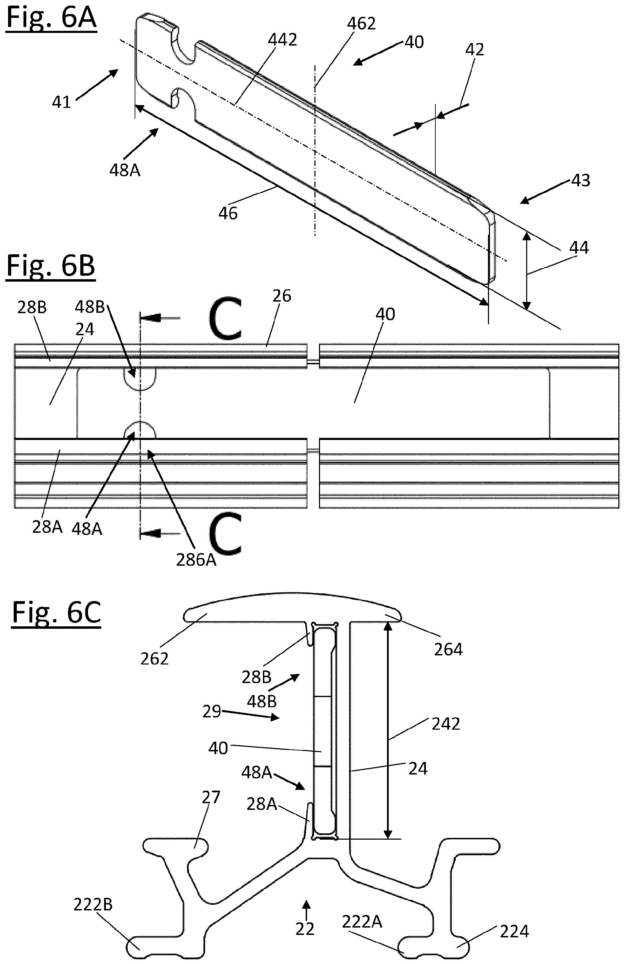

Turning to figures 5A - 6C, two solar panel support rails 20A, 20B are shown in alignment with each other. The depicted assembly further comprises a connecting piece 40 that connects the two solar panel support rails. The connecting piece has a thickness 42 that substantially corresponds to the first distance 282 and has a height 44 than is substantially as high as the support wall portion height 242. Herein, the support wall portion height substantially corresponds to a distance between the retainer wall portion and the connector wall portion of the rail. Therewith, the height 44 is larger than the difference between the support wall portion height and the height 284 of the first coupling member and the height of the second coupling member. The length 46 of the connecting piece is larger than its height 44.

The connecting piece 40, being substantially plate shaped, flat, and elongate, defines two recesses 48A, 48B that are each located on one side of the middle 462 of the height of the connecting piece below and above the middle of the height. In figures 5B and 5C, a locally plastically deformed portion 286A of the first coupling member 28A has been pushed into the recess 48A of the connecting piece and thereby fixates the connecting piece to the first and second solar panel support rails. It would also be possible that, if no recess was present and the connecting piece was made of a weaker material than the first coupling member, the locally deformed portion would have been pushed into the weaker material itself.

The assembly comprises the connecting piece 40 comprising a first end 41 being located in the connector space 29 of the solar panel support rail 20A and a second end 43 being located in the connector space of the solar panel support rail 20B .

To arrive at this assembly, a method for installing solar panels comprises the step of mounting a plurality of rail brackets 30 on a structure or target surface 4 and placing at least a first and second solar panel support rail 20A, 20B onto the brackets (as depicted in figures 4A, 4B, and 4C). As can be seen in figures 7A-8B, the first and second solar panel support rails are positioned end-to-end and the connecting piece 40 has been inserted into the respective connector spaces of the two solar panel support rails.

By hooking a hook 54 of a connecting tool 50 behind the tool hooking element 27 and moving a handle portion 52 of the connecting tool in an upward direction, a deforming part 56 of the connecting tool is leveraged against the first coupling member 28A around the hook that is a pivot point. In doing so, the first coupling member 28A is locally deformed into the recess 48A of the connecting piece 40.

The terms "a" or "an", as used herein, are defined as one or more than one. The term plurality, as used herein, is defined as two or more than two. The term another, as used herein, is defined as at least a second or more. The terms including and/or having, as used herein, are defined as comprising i.e., open language, not excluding other elements or steps.

Any reference signs in the claims should not be construed as limiting the scope of the claims or the invention. It will be recognized that a specific embodiment as claimed may not achieve all of the stated objects.

The mere fact that certain measures are recited in mutually different dependent claims does not indicate that a combination of these measures cannot be used to advantage.

White lines between text paragraphs in the text above indicate that the technical features presented in the paragraph may be considered independent from technical features discussed in a preceding paragraph or in a subsequent paragraph.

## Claims

1. Rail bracket (30) for retaining a solar panel support rail (20), wherein the rail bracket comprises:
- a main body (32) defining a hole (322) via which it can be fixed to a target surface (4),
- a first hook element (34) being connected to the main body, wherein the hook element has a free hook end (342) and defines a recess (344) that is configured to accommodate a bracket hooking member (222A, 222B) of a solar panel support rail (20),
- a retainer member (36) being connected to the main body and being located facing the recess, wherein the retainer member comprises a resilient member (362) and a retaining tab (364), the retaining tab being connected to the resilient member, wherein an entry gap (371) is defined between the retainer member and the free hook end, wherein the retainer member is configured to:
a) first be moved downward from an initial, rail retaining position (366) in an undeformed state of the resilient member to a rail placement position (368) in a deformed state of the resilient member, wherein in the rail placement position the entry gap is wider than in the rail retaining position and provides access for the bracket hooking member to be positioned in the recess,
b) subsequently to move upward from the rail placement position back to the rail retaining position to lock the bracket hooking member in the recess after the bracket hooking member is placed in the recess.

2. Rail bracket according to the preceding claim, configured to prevent a movement of the bracket hooking member in four directions in the locked state, wherein:
- a downwardly facing side (345) of the first hook element (34) facing the upwardly facing support surface prevents the bracket hooking member from moving away from the main body,
- a side (343) of an upwardly extending portion of the first hook element (34) prevents the bracket hooking member from moving away from the retainer member,
- the upwardly facing support surface (346) prevents the bracket hooking member from moving towards the main body,
- the retaining tab (364) prevents the bracket hooking member from moving out of the recess (344).

3. Rail bracket according to any of the preceding claims, wherein the retainer member is configured to abut against a stop (224) of the solar panel support rail when the bracket hooking member is located in the recess and the retainer member has moved back to the retainment position.

4. Rail bracket according to any of the preceding claims, wherein the resilient member is a leaf spring.

5. Rail bracket according to any of the preceding claims, wherein the retainer member extends downward from an end of the resilient member and comprises a curved part (361) which forms a transition between the resilient member and the retaining tab, wherein in particular the retaining tab extends in particular at a substantially right angle to the resilient member

6. Rail bracket according to the preceding claim, wherein in the rail placement position the retainer member is flush or substantially flush with an upwardly facing support surface (346) of the first hook element.

7. Rail bracket according to any of the preceding claims, wherein the resilient member is connected to the main body at a first end (363) of the resilient member, in particular to a protruding part (324) of the main body, wherein the resilient member extends from the connection at the protruding part towards the first hook element.

8. Rail bracket according to any of the preceding claims, further comprising a second hook element (38) that extends away from the main body and is located at a distance (382) from the first hook element.

9. Rail bracket according to the preceding claim, wherein the first and second hook element face in the same direction and are configured to allow a first and second bracket hooking member of a solar panel support rail to slide into the first and second hook element from the same side.

10. Rail bracket according to any of claims 8-9, wherein the second hook element does not have a retainer member.

11. Rail bracket according to any of the preceding claims, wherein the rail bracket is made of a cut off piece of metal, in particular aluminium, more in particular an extruded aluminium profile.

12. Rail bracket according to any of the preceding claims, wherein the resilient member and the retaining tab are integral.

13. Assembly of a rail bracket according to any of claims 1-12 and a solar panel support rail comprising a connector wall portion that comprises at least one bracket hooking member, wherein the at least one bracket hooking member is located and locked in the recess of the first hook element and wherein the retaining tab prevents the solar panel support rail from moving out of the recess.

14. Assembly according to the preceding claim, wherein the rail bracket comprises a second hook element (38) that extends away from the main body and is located at a distance (382) from the first hook element, wherein the solar panel support rail further comprises a second bracket hooking member and the second bracket hooking member is located in the recess of the second hook element.

15. Method for connecting a solar panel support rail (20) comprising a bracket hooking member (222) to a target surface (4) using at least one rail bracket (30) according to any of claims 1-12, the method comprising:
- mounting the rail bracket to a target surface via the main body,
- placing a solar panel support rail onto the rail bracket, wherein the bracket hooking member is placed in the recess by deforming the resilient member of the retainer member from a retainment position (366) to a rail placement position (368), wherein when the bracket hooking member is located in the recess, the retainer member moves back to the retainment position and locks the solar panel support rail in place, wherein the retaining tab abuts against a stop (224) of the solar panel support rail.
